# EUROPEAN PATENT APPLICATION

(11) **EP 4 790 265 A1**
(43) Date of publication of application: **12.08.2026**
(21) Application number: 25156723.6
(22) Date of filing: 10.02.2025
(51) Int. Cl.: F16B 19/14

(54) **SYSTEM AND METHOD FOR SECURING A JOINING ELEMENT TO A WORKPIECE**

(71) Applicant: Hilti Aktiengesellschaft, 9494 Schaan (LI)
(72) Inventor: Roth, Peter, 9472 Grabs (CH)
(74) Representative: Hilti Aktiengesellschaft Corporate Intellectual Property

(57) **Abstract**

The invention relates to a system for securing a joining element to a workpiece, comprising:
- the joining element (112), wherein the joining element (112) comprises at least one contact portion (114) configured for being placed against the workpiece (120) when being secured to the workpiece (120);
- at least one fastener (116); wherein the fastener (116) comprises at least one propellant charge (118) configured for driving the fastener (116) into the workpiece (120) upon ignition;
wherein the at least one fastener (116) is configured to secure the joining element (112) to the workpiece (120) by penetrating into the workpiece (120) through the at least one contact portion (114) in a manner that the fastener (116) reaches a penetration depth (122) within the workpiece (120) upon ignition of the at least one propellant charge (118), wherein the system (110) is further configured for the penetration depth (122) to not exceed a threshold by stopping further penetration of the fastener (116) into the workpiece (120).

## Description

### Technical Field

The present invention relates to a system for securing a joining element to a workpiece and a method for securing a joining element to a workpiece.

The present application generally relates to fastening systems, and more particularly to a system for securing a joining element to a workpiece. Related domains include devices for fastening or securing constructional elements or machine parts together, e.g. nails, bolts, circlips, clamps, clips or wedges, joints or jointing, shaping or joining of plastics, shaping of material in a plastic state, after-treatment of the shaped products, e.g. repairing and forging, hammering, pressing metal, riveting, forge furnaces.

### Background art

US5367848A discloses a bracket for use in the after market of metal clad buildings to facilitate attachment of new roof or wall panels of any desired profile, directly over existing ribbed or fluted panels of various configurations. Commonly known in the trades as a sub purlin or sub girt. Generally, a one piece Z shaped metal bracket with opposed top and bottom flanges in a parallel plane. The bottom flange and adjacent lower portion of the web contain a series of notches that allow the bracket to nest onto and over existing ribbed roof or wall panels. The top flange is automatically in position, lying flat and continuous, to receive and attach the new panels thereto. The solid portion of lower flange is preferred to be positioned directly above the underlying substructural support system members of the existing building to assure a structurally sound attachment of bracket to the building. Pre-punched holes in the solid portion of lower flange dictate required location, number and size of fasteners to be inserted through lower rib surface of existing panel into substructural system members. The bracket and new panel installation require only standard tools, fasteners and technique as normal to the trade to complete the procedure.

US7779590B2 discloses a system and method of constructing a composite floor system having increased shear transfer between a slab and support members of the system. The composite floor system may include any combination of the following elements: a support member, a reinforcing member, a transfer member, a decking material, a fastener, and/or a slab.

### Problem to be solved

It is therefore desirable to provide a system for securing a joining element to a workpiece and a method for securing a joining element to a workpiece that at least in part overcome the problems presented by the prior art.

It may be further desirable to provide a system and a method that ensure that the fastener does not damage the workpiece or harms a user. It may be further desirable to provide a system and a method ensuring an effective transfer of energy from the propellant charge to the fastener.

### Summary

This problem is addressed by a system for securing a joining element to a workpiece and a method for securing a joining element to a workpiece with the features of the independent claims. Advantageous embodiments which might be realized in an isolated fashion or in any arbitrary combinations are listed in the dependent claims as well as throughout the specification.

In a first aspect, a system for securing a joining element to a workpiece is disclosed. The system comprises:
- the joining element, wherein the joining element comprises at least one contact portion configured for being placed against the workpiece when being secured to the workpiece.

The term "joining element" as used herein is a broad term and is to be given its ordinary and customary meaning to a person of ordinary skill in the art and is not to be limited to a special or customized meaning. The term specifically may refer, without limitation, to a structural component configured to connect and/or secure at least two parts together. The joining element may be or may comprise at least one of:
- a bent metal strip;
- an element made from welded metal strips or sections of sheet metal;
- a section of corrugated sheet metal ;
- a deep-drawn metal element;
- a bent metal wire with flattened contact portions.

Alternatively or in addition, the joining element may be a shear connector element configured for preventing shear forces between a supporting structure and concrete, preferably of a floor slab or a ceiling. When the shear forces between a supporting structure and concrete are prevented, a relative movement between the supporting structure and the concrete may be prevented. The term "shear forces" as used herein is a broad term and is to be given its ordinary and customary meaning to a person of ordinary skill in the art and is not to be limited to a special or customized meaning. The term specifically may refer, without limitation, to force components acting parallel to a surface area being considered, which particularly may lead to material deformation. The surface area may be parallel to the contact portion. In the application, these forces may be present between the supporting structure and the concrete, preferably of a ceiling, and are transferred using the shear connector element.

The term "workpiece" as used herein is a broad term and is to be given its ordinary and customary meaning to a person of ordinary skill in the art and is not to be limited to a special or customized meaning. The term specifically may refer, without limitation, to an arbitrary part that is processed, shaped and/or modified. The workpiece may be the supporting structure. The term "supporting structure" as used herein is a broad term and is to be given its ordinary and customary meaning to a person of ordinary skill in the art and is not to be limited to a special or customized meaning. The term specifically may refer, without limitation, to any structural framework or element that provides support to a further structure or component. The supporting structure may be or may comprise at least one of: a steel beam; a steel girder, a steel truss, a steel tube, a steel column; configured to support concrete, preferably of a floor slab or a ceiling. The supporting structure and/or the concrete may be comprised by at least one of: a building; a bridge, a balcony, a tower, a prefabricated composite / concrete slab, a prefabricated bridge deck, a prefabricated concrete wall, a reinforcing construction element.

The joining element, specifically the at least one contact portion of the joining element, may be of or may comprise a material selected from at least one of:
- Structural steel, specifically S235, S275 or S355;
- Weatherproof structural steel, specifically S355J2W;
- Reinforcing steel, specifically B550B;
- Spheroidal graphite cast iron, specifically EN-GJS-350-22-LT, EN-GJS-400-18-L or EN-GJS-400-18;
- Fibre-reinforced polymer material, specifically glass fibre-reinforced polymer or carbon fibre-reinforced polymer.

The system further comprises:
- at least one fastener; wherein the fastener comprises at least one propellant charge configured for driving the fastener into the workpiece upon ignition.

The term "fastener" as used herein is a broad term and is to be given its ordinary and customary meaning to a person of ordinary skill in the art and is not to be limited to a special or customized meaning. The term specifically may refer, without limitation, to a device or item used to securely join two or more objects together mechanically. The fastener may be at least one of: a nail; a stud, a smooth bolt, a threaded bolt, a rivet, a pin.

The at least one fastener may be of or may comprise a material selected from at least one of:
- Unalloyed, high carbon steel, specifically C60 or C67;
- Low alloy steel, specifically 51CrV4;
- Tool steel, specifically 60 SiMn 2 or 90 MnV 2;
- Maraging steel, specifically X 3 NiCoMoTi 18-9-5;
- Martensitic stainless steels, specifically AISI 410 (X12Cr13) or AISI 420 (X46Cr13);
- Duplex steel, specifically AISI 418LN (X2CrNiMoN22-5-3);
- Nitrogen-alloyed stainless steel, specifically P558.

The term "propellant charge" as used herein is a broad term and is to be given its ordinary and customary meaning to a person of ordinary skill in the art and is not to be limited to a special or customized meaning. The term specifically may refer, without limitation, to at least one chemical substance configured to generate kinetic energy for driving the movement of at least one component. The fastener may further comprise at least one chamber, wherein the at least one propellant charge may be arranged within the at least one chamber.

The at least one propellant charge may be selected from at least one of:
- Nitrocellulose, preferably Nitrocellulose fibre;
- single, double or triple-base smokeless powder.

The at least one propellant charge may release at least 400, 500 or 600 joules of mechanical fastening energy upon ignition. By tailoring the energy release to the specific requirements of the application, specifically with regard to the workpiece, the thickness and/or the tensile strength of the contact portion, the system may optimize the use of materials and energy, resulting in a more efficient and cost-effective solution.

The at least one fastener is configured to secure the joining element to the workpiece by penetrating into the workpiece through the at least one contact portion in a manner that the fastener reaches a penetration depth within the workpiece upon ignition of the at least one propellant charge, wherein the system is further configured for the penetration depth to not exceed a threshold by stopping further penetration of the fastener into the workpiece. Thereby, the system may provide the advantage of controllability, allowing precise management of the penetration depth of the fastener into the workpiece, ensuring that the fastener does not damage the workpiece or harm a user by penetrating through the contact portion and/or the workpiece. Thereby, the system may provide the advantage of ensuring an effective transfer of energy from the propellant charge to the fastener, resulting in reliable and efficient penetration into the workpiece.

The term "penetration depth" as used herein is a broad term and is to be given its ordinary and customary meaning to a person of ordinary skill in the art and is not to be limited to a special or customized meaning. The term specifically may refer, without limitation, to the measurement or extent to which an object, such as the fastener, enters into a material or substance. In the context of the application, the penetration depth references how far the fastener sinks into the workpiece as it passes through the contact portion.

The term "threshold" as used herein is a broad term and is to be given its ordinary and customary meaning to a person of ordinary skill in the art and is not to be limited to a special or customized meaning. The term specifically may refer, without limitation, to a predefined limit or boundary that should not be exceeded. In the context of the application, the threshold may refer to a maximum permissible penetration depth of the fastener into the workpiece that is defined by the system. The threshold may be defined by the system itself and, thereby, independent of the workpiece.

For the system to be further configured for the penetration depth to not exceed a threshold,
- at least a portion of the at least one fastener may be configured to at least indirectly impact onto the at least one contact portion when the fastener is driven into the workpiece and/or
- the at least one contact portion may be configured to stop the further penetration of the fastener into the workpiece upon impact.

The portion of the at least one fastener may comprise or may be a limit stop. The limit stop may be or may comprise a shoulder that radially extends around the fastener. The term "shoulder" as used herein is a broad term and is to be given its ordinary and customary meaning to a person of ordinary skill in the art and is not to be limited to a special or customized meaning. The term specifically may refer, without limitation, to a step or raised edge on the fastener. The shoulder may be created by a change in diameter or geometry of the fastener.

For the at least one contact portion to be configured to stop the further penetration of the fastener into the workpiece upon impact, the at least one contact portion may have a thickness and/or a tensile strength selected such that the at least one contact portion stops the further penetration of the fastener into the workpiece. Thereby, the contact portion may withstand the impact of the fastener, preferably in a manner that the contact portion remains intact. The "tensile strength" may be a material property that measures the maximum amount of tensile stress a material can withstand before it fails or breaks.

The at least one contact portion may have a thickness between 1 mm and 20 mm, preferably between 2 mm and 15 mm, more preferably between 3 mm and 10 mm. The at least one contact portion may have a tensile strength between 100 MPa (Megapascal) and 1000 MPa, preferably between 200 MP and 600 MPa, more preferably between 300 MPa and 600 MPa.

The at least one contact portion may comprise at least one opening configured for the at least one fastener to pass through the opening when the fastener penetrates into the workpiece through the at least one contact portion. The opening may ensure a guided penetration into the workpiece, reducing the likelihood of misalignment and increasing the precision of the fastening process.

The at least one contact portion may comprise at least one raised edge at least partially surrounding the opening, wherein the fastener comprises a collar that radially extends at least partly around the fastener, wherein the collar is configured to at least partly flatten out the raised edge against the workpiece during the penetration of the fastener into the workpiece. The raised edge may provide additional guidance and support for the fastener during penetration, which may lead to a cleaner insertion and a stronger bond between the joining element and the workpiece. By flattening the raised edge during penetration, the system may create a larger contact area between the joining element and the workpiece, which can distribute the load more evenly and improve the overall structural integrity of the connection.

The fastener may be preassembled within the opening of the joining element. The fastener may be clamped and/or pressed into the opening. The preassembly of the fastener within the opening may simplify the installation process, reducing the time and labor required for assembly. It may further ensure a correct positioning and orientation of the fastener relative to the joining element, which enhances the structural integrity and reliability of the connection. In addition, a misuse of a user may be prevented, improving the security for the user.

The joining element may form a bridge comprising two contact portions and an arch portion between the two contact portions. The presence of two contact portions with an arch portion in between may allow for an even distribution of forces across the system, which can minimize stress concentrations. Further, an easy embedding, particularly of the bridge, in concrete may be possible, which may be purred over the joining element once it is fastened to the workpiece in order to the transfer shear forces between the poured concrete and the worpiece.

The term "bridge" as used herein is a broad term and is to be given its ordinary and customary meaning to a person of ordinary skill in the art and is not to be limited to a special or customized meaning. The term specifically may refer, without limitation, to a structure of the joining element generating a physical gap between the arch portion of the joining and the workpiece, particularly when the bridge is in contact with the workpiece at the contact portions.

The system may comprise a plurality of fastener, preferably at least two, three or four fastener, for securing the joining element to the workpiece. The use of a plurality of fasteners for securing the joining element may ensure a more secure and stable connection to the workpiece, which can enhance the overall robustness of the assembly.

The system may further comprise:
- a device configured to ignite the at least one propellant charge for driving the fastener into the workpiece, wherein the device comprises a contact nose configured to be pressed against the joining element and/or the fastener, wherein the device comprises at least one ignition tip configure for igniting the at least one propellant charge, preferably by contacting the at least one propellant charge, when the contact nose is pressed against the joining element and/or the fastener and a trigger signal generated by using a trigger of the device is received.

For the ignition tip to be configured for igniting the at least one propellant charge, preferably by contacting the at least one propellant charge, the ignition tip may be arranged movable, preferably translationally movable, within the device. The movement may be an axial movement with respect to the device.

When the contact nose is pressed against the joining element and/or the fastener, a combustion chamber of the device and the fastener may form a gastight volume, preferably in a manner that the device acts as a counterforce component configured to direct the mechanical fastening energy released by the at least one propellant charge in a specific direction.

In order to ignite the at least one propellant charge by contacting the at least one propellant charge, the at least one propellant charge may be ignited by a mechanical impact of the ignition tip onto the at least one propellant charge. Therefore, a direct contact of the ignition tip and the at least one propellant charge may be required. The mechanical impact may generate friction heat in a manner that the friction heat ignites the at least one propellant charge.

Alternatively, or in addition, in order to ignite the at least one propellant charge, preferably by contacting the at least one propellant charge, the ignition tip may be actively heated to a temperate configured to ignite the at least one propellant charge, preferably electrically heated. Therefore, a direct contact of the ignition tip and the at least one propellant charge may be required. The ignition tip may be actively heated before it contacts the at least one propellant charge. The ignition tip may be actively heated before it contacts the at least one propellant charge below an ignition temperature of the at least one propellant charge. Thereby, the safety of a user may be increased. Alternatively, or in addition, ignition tip may be actively heated when it contacts the at least one propellant charge. The ignition tip may be actively heated when it contacts the at least one propellant charge to or above an ignition temperature of the at least one propellant charge. The active heating may be an electrical heating. As an example, an ignition of Nitrocellulose, which may be the preferred at least one propellant charge, may not take place below a temperature of 130°C. An ignition of Nitrocellulose may take place at temperatures of 180°C to 200°C.

Alternatively, or in addition, in order to ignite the at least one propellant charge, preferably by contacting the at least one propellant charge,
- the ignition tip may comprise a plurality of electrodes configured to generate at least one electric spark and/or at least one arc;
- the ignition tip may comprise at least one light source, preferably being or comprising a laser, more preferably being or comprising a diode laser.

Therefore, no direct contact of the ignition tip and the at least one propellant charge may be required.

The light source may be arranged within a light source chamber of the ignition tip comprising at least one window. The at least one window may be transparent for the light generated by the at least one light source. The at least one window may be a temperature-resistant window and/or a pressure-resistant window such that it withstands the ignition of the at least one propellant charge. The window may be or may comprise borosilicate glass, quartz glass and/or sapphire glass. The light source may be directed through the window onto the at least one propellant charge. The window may form or may comprise a lens configured to focus the light generated by the at least one light source onto the propellant charge.

The ignition methods not requiring a strong mechanical impact onto the at least one propellant charge may have the advantage of a more reliable ignition. These ignition methods may require fewer or even no moving mechanical components that are susceptible to contamination and wear, and unnecessary contact pressure.

In a further aspect, a method for securing a joining element to a workpiece by using a fastener, wherein the method comprises using the system according to any one of the preceding claims.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

Summarizing and without excluding further possible embodiments, the following embodiments may be envisaged:
Embodiment 1: A system for securing a joining element to a workpiece, comprising:
   - the joining element, wherein the joining element comprises at least one contact portion configured for being placed against the workpiece when being secured to the workpiece;
   - at least one fastener; wherein the fastener comprises at least one propellant charge configured for driving the fastener into the workpiece upon ignition;
   wherein the at least one fastener is configured to secure the joining element to the workpiece by penetrating into the workpiece through the at least one contact portion in a manner that the fastener reaches a penetration depth within the workpiece upon ignition of the at least one propellant charge, wherein the system is further configured for the penetration depth to not exceed a threshold by stopping further penetration of the fastener into the workpiece.
Embodiment 2: The system according to the preceding Embodiment, wherein, for the system to be further configured for the penetration depth to not exceed a threshold,
   - at least a portion of the at least one fastener is configured to at least indirectly impact onto the at least one contact portion when the fastener is driven into the workpiece and
   - the at least one contact portion is configured to stop the further penetration of the fastener into the workpiece upon impact.
Embodiment 3: The system according to the preceding Embodiment, wherein the portion of the at least one fastener comprises or is a limit stop.
Embodiment 4: The system according any one of the preceding Embodiment, wherein the limit stop is or comprises a shoulder that radially extends around the fastener.
Embodiment 5: The system according to any one of the three preceding Embodiments, wherein, for the at least one contact portion to be configured to stop the further penetration of the fastener into the workpiece upon impact, the at least one contact portion has a thickness and/or a tensile strength selected such that the at least one contact portion stops the further penetration of the fastener into the workpiece.
Embodiment 6: The system according to the preceding Embodiment, wherein the at least one contact portion has a thickness between 1 mm and 20 mm, preferably between 2 mm and 15 mm, more preferably between 3 mm and 10 mm.
Embodiment 7: The system according any one of the two preceding Embodiments, wherein the at least one contact portion has a tensile strength between 100 MPa and 1000 MPa, preferably between 200 MP and 600 MPa, more preferably between 300 MPa and 600 MPa.
Embodiment 8: The system according to any one of the preceding Embodiments, wherein the fastener comprises at least one chamber, wherein the at least one propellant charge is arranged within the at least one chamber.
Embodiment 9: The system according to the preceding Embodiment, wherein the joining element is a shear connector element configured for preventing shear forces between a supporting structure and concrete, preferably of a ceiling, wherein the workpiece is the supporting structure.
Embodiment 10: The system according any one of the preceding Embodiments, wherein the at least one propellant charge is selected from at least one of:
   - Nitrocellulose, preferably Nitrocellulose fibre;
   - single, double or triple-base smokeless powder.
Embodiment 11: The system according to any one of the preceding Embodiments, wherein the at least one contact portion comprises at least one opening configured for the at least one fastener to pass through the opening when the fastener penetrates into the workpiece through the at least one contact portion.
Embodiment 12: The system according to the preceding Embodiments, wherein the at least one contact portion comprises at least one raised edge at least partially surrounding the opening, wherein the fastener comprises a collar that radially extends at least partly around the fastener, wherein the collar is configured to at least partly flatten out the raised edge against the workpiece during the penetration of the fastener into the workpiece.
Embodiment 13: The system according to any one of the two preceding Embodiments, wherein the fastener is preassembled within the opening of the joining element.
Embodiment 14: The system according to any one of the preceding Embodiments, wherein the at least one propellant charge releases at least 400, 500 or 600 joules of mechanical fastening energy upon ignition.
Embodiment 15: The system according to any one of the preceding Embodiments, wherein the joining element, specifically the at least one contact portion of the joining element, is of or comprises a material selected from at least one of:
   - Structural steel, specifically S235, S275 or S355;
   - Weatherproof structural steel, specifically S355J2W;
   - Reinforcing steel, specifically B550B;
   - Spheroidal graphite cast iron, specifically EN-GJS-350-22-LT, EN-GJS-400-18-L or EN-GJS-400-18;
   - Fibre-reinforced polymer material, specifically glass fibre-reinforced polymer or carbon fibre-reinforced polymer.
Embodiment 16: The system according to any one of the preceding Embodiments, wherein the at least one fastener is of or comprises a material selected from at least one of:
   - Unalloyed, high carbon steel, specifically C60 or C67;
   - Low alloy steel, specifically 51CrV4;
   - Tool steel, specifically 60 SiMn 2 or 90 MnV 2;
   - Maraging steel, specifically X 3 NiCoMoTi 18-9-5;
   - Martensitic stainless steels, specifically AISI 410 (X12Cr13) or AISI 420 (X46Cr13);
   - Duplex steel, specifically AISI 418LN (X2CrNiMoN22-5-3);
   - Nitrogen-alloyed stainless steel, specifically P558.
Embodiment 17: The system according any one of the preceding Embodiments, wherein the joining element forms a bridge comprising two contact portions and an arch portion between the two contact portions.
Embodiment 18: The system according any one of the preceding Embodiments, comprising a plurality of fastener, preferably at least two, three or four fasteners, for securing the joining element to the workpiece.
Embodiment 19: The system according any one of the preceding Embodiments, further comprising:
   - a device configured to ignite the at least one propellant charge for driving the fastener into the workpiece, wherein the device comprises a contact nose configured to be pressed against the joining element and/or the fastener, wherein the device comprises at least one ignition tip configure for igniting the at least one propellant charge, preferably by contacting the at least one propellant charge, when the contact nose is pressed against the joining element and/or the fastener and a trigger signal generated by using a trigger of the device is received.
Embodiment 20: A method for securing a joining element to a workpiece by using a fastener, wherein the method comprises using the system according to any one of the preceding Embodiments.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows a side view of an exemplary system for securing a joining element to a workpiece;
- Figure 2: shows a top view of the exemplary system for securing the joining element to the workpiece.
- Figure 3: shows a side view of a further exemplary system for securing a joining element to a workpiece; and
- Figure 4: shows a schematic of an exemplary device configured to ignite the at least one propellant charge.

### Detailed description of the embodiments

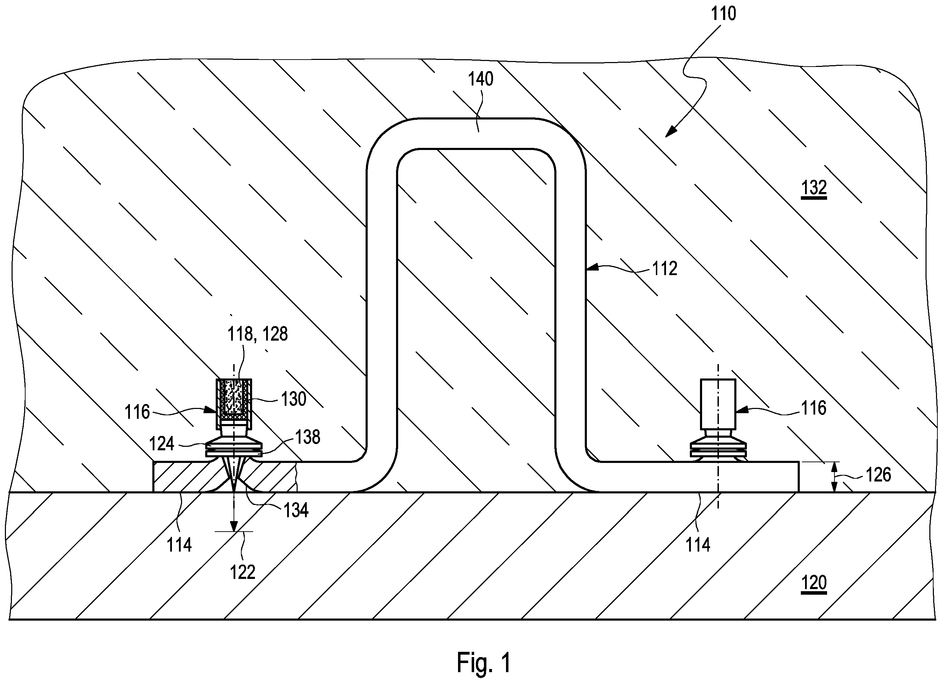

Figure 1 shows a side view of an exemplary system 110 for securing a joining element 112 to a workpiece 120. The joining element 112 may be a shear connector element configured for preventing shear forces between a supporting structure and concrete 132, preferably of a floor slab or a ceiling, wherein the workpiece 120 is the supporting structure.

The system 110 comprises:
- the joining element 112, wherein the joining element 112 comprises at least one contact portion 114 configured for being placed against the workpiece 120 when being secured to the workpiece 120;
- at least one fastener 116; wherein the fastener 116 comprises at least one propellant charge 118 configured for driving the fastener 116 into the workpiece 120 upon ignition;
wherein the at least one fastener 116 is configured to secure the joining element 112 to the workpiece 120 by penetrating into the workpiece 120 through the at least one contact portion 114 in a manner that the fastener 116 reaches a penetration depth 122 within the workpiece 120 upon ignition of the at least one propellant charge 118, wherein the system is further configured for the penetration depth 122 to not exceed a threshold by stopping further penetration of the fastener 116 into the workpiece 120.

For the system 110 to be further configured for the penetration depth 122 to not exceed a threshold,
- at least a portion 124 of the at least one fastener 116 may be configured to at least indirectly impact onto the at least one contact portion 114 when the fastener 116 is driven into the workpiece 120 and
- the at least one contact portion 114 may be configured to stop the further penetration of the fastener 116 into the workpiece 120 upon impact.

The portion 124 of the at least one fastener 116 may comprise or may be a limit stop. The limit stop may be or may comprise a shoulder that radially extends around the fastener.

For the at least one contact portion 114 to be configured to stop the further penetration of the fastener 116 into the workpiece 120 upon impact, the at least one contact portion 114 may have a thickness 126 and/or a tensile strength selected such that the at least one contact portion 114 stops the further penetration of the fastener 116 into the workpiece.

The at least one contact portion 114 may have a thickness 126 between 1 mm and 20 mm, preferably between 2 mm and 15 mm, more preferably between 3 mm and 10 mm. The at least one contact portion may have a tensile strength between 100 MPa and 1000 MPa, preferably between 200 MP and 600 MPa, more preferably between 300 MPa and 600 MPa.

The fastener 116 may comprise at least one chamber 128, wherein the at least one propellant charge 118 is arranged within the at least one chamber 128. The chamber 128 may be at least in part covered with a plastic layer 130.

The at least one contact portion 114 may comprises at least one opening134 configured for the at least one fastener 116 to pass through the opening 134 when the fastener penetrates into the workpiece 120 through the at least one contact portion 114.

The at least one contact portion 114 may comprise at least one raised edge 136 at least partially surrounding the opening 134, wherein the fastener 116 comprises a collar 138 that radially extends at least partly around the fastener 116, wherein the collar 138 is configured to at least partly flatten out the raised edge 136 against the workpiece 120 during the penetration of the fastener 116 into the workpiece 120.

The fastener 116 may be preassembled within the opening 134 of the joining element 112.

The joining element may form a bridge comprising two contact portions 114 and an arch portion 140 between the two contact portions. The system 110 may comprise a plurality of fasteners 116, preferably at least two, three or four fastener 116, for securing the joining element 112 to the workpiece 120.

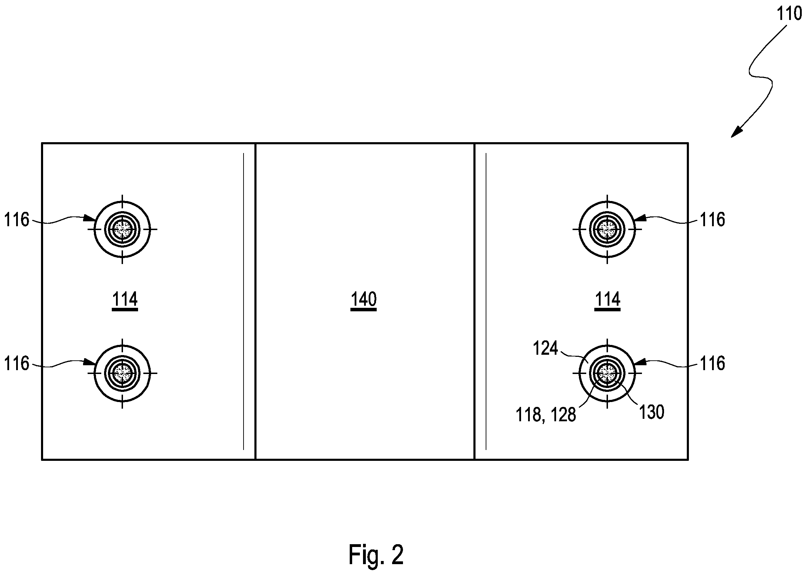

Figure 2 shows a top view of the system 110 for securing a joining element 112 to a workpiece 120 shown in Figure 1.

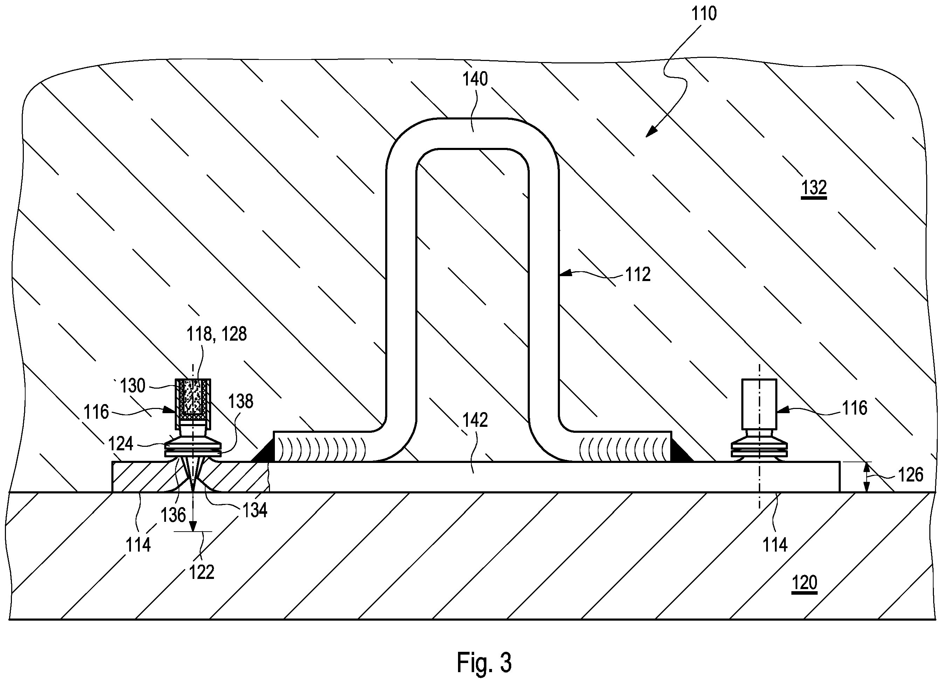

Figure 3 shows a side view of a further exemplary system 110 for securing a joining element 112 to a workpiece 120. The system 110 may comprise a connecting portion 142 between the two contact portions 114 that is also in contact with the workpiece 120. The connecting portion 142 may have the advantage of providing additional stability to the system 110. The two contact portions 114 and the connecting portion 142 may form a single piece.

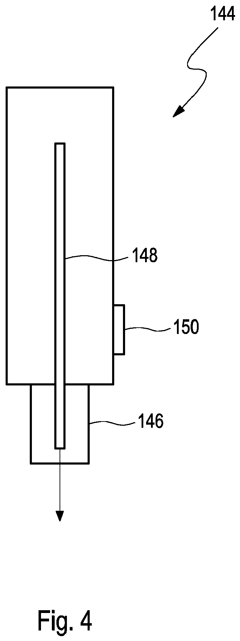

As may be derived from Figure 4, the system may further comprise:
- a device 144 configured to ignite the at least one propellant charge 118 for driving the fastener 116 into the workpiece 120, wherein the device 144 comprises a contact nose 146 configured to be pressed against the joining element 112 and/or the fastener 116, wherein the device 114 comprises at least one ignition tip 148 configure for igniting the at least one propellant charge 118, preferably by contacting the at least one propellant charge 118, when the contact nose 146 is pressed against the joining element 112 and/or the fastener 116 and a trigger signal generated by using a trigger 150 of the device 114 is received.

For igniting the at least one propellant charge 118, the at least one ignition tip 148 may be accelerated onto the propellant charge 118 to generate the contact (as by the arrow).

### List of reference numbers

- 110: system
- 112: joining element
- 114: contact portion
- 116: fastener
- 118: propellant charge
- 120: workpiece
- 122: penetration depth
- 124: portion of the fastener
- 126: thickness
- 128: chamber
- 130: plastic layer
- 132: concrete
- 134: opening
- 136: raised edge
- 138: collar
- 140: arch portion
- 142: connecting portion
- 144: device
- 146: contact nose
- 148: ignition tip
- 150: trigger

## Claims

1. A system for securing a joining element to a workpiece, comprising:
- the joining element (112), wherein the joining element (112) comprises at least one contact portion (114) configured for being placed against the workpiece (120) when being secured to the workpiece (120);
- at least one fastener (116); wherein the fastener (116) comprises at least one propellant charge (118) configured for driving the fastener (116) into the workpiece (120) upon ignition;
wherein the at least one fastener (116) is configured to secure the joining element (112) to the workpiece (120) by penetrating into the workpiece (120) through the at least one contact portion (114) in a manner that the fastener (116) reaches a penetration depth (122) within the workpiece (120) upon ignition of the at least one propellant charge (118), wherein the system (110) is further configured for the penetration depth (122) to not exceed a threshold by stopping further penetration of the fastener (116) into the workpiece (120).

2. The system (110) according to the preceding claim, wherein, for the system (110) to be further configured for the penetration depth (122) to not exceed a threshold,
- at least a portion (124) of the at least one fastener (116) is configured to at least indirectly impact onto the at least one contact portion (114) when the fastener (116) is driven into the workpiece (120) and
- the at least one contact portion (114) is configured to stop the further penetration of the fastener (116) into the workpiece (120) upon impact.

3. The system (110) according to the preceding claim, wherein the portion (124) of the at least one fastener (116) comprises or is a limit stop, wherein the limit stop is or comprises a shoulder that radially extends around the fastener (116).

4. The system (110) according to any one of the two preceding claims, wherein, for the at least one contact portion (114) to be configured to stop the further penetration of the fastener (116) into the workpiece (120) upon impact, the at least one contact portion (114) has a thickness and/or a tensile strength selected such that the at least one contact portion (114) stops the further penetration of the fastener (116) into the workpiece (120).

5. The system (110) according to the preceding claim, wherein the at least one contact portion (114) has a thickness (126) between 1 mm and 20 mm, preferably between 2 mm and 15 mm, more preferably between 3 mm and 10 mm.

6. The system (110) according any one of the two preceding claims, wherein the at least one contact portion (114) has a tensile strength between 100 MPa and 1000 MPa.

7. The system (110) according to any one of the preceding claims, wherein the joining element (112) is a shear connector element configured for preventing shear forces between a supporting structure and concrete (132), wherein the workpiece (120) is the supporting structure.

8. The system (110) according to any one of the preceding claims, wherein the at least one contact portion (114) comprises at least one opening configured for the at least one fastener (116) to pass through the opening when the fastener (116) penetrates into the workpiece (120) through the at least one contact portion (114).

9. The system (110) according to the preceding claims, wherein the at least one contact portion (114) comprises at least one raised edge (136) at least partially surrounding the opening, wherein the fastener (116) comprises a collar (138) that radially extends at least partly around the fastener (116), wherein the collar (138) is configured to at least partly flatten out the raised edge (136) against the workpiece (120) during the penetration of the fastener (116) into the workpiece (120).

10. The system (110) according to any one of the two preceding claims, wherein the fastener (116) is preassembled within the opening of the joining element (112).

11. The system (110) according to any one of the preceding claims, wherein the at least one propellant charge (118) releases at least 400, 500 or 600 joules of mechanical fastening energy upon ignition.

12. The system (110) according any one of the preceding claims, wherein the joining element (112) forms a bridge comprising two contact portions (114) and an arch portion between the two contact portions (114).

13. The system (110) according any one of the preceding claims, comprising a plurality of fasteners (116), preferably at least two, three or four fasteners (116), for securing the joining element (112) to the workpiece (120).

14. The system (110) according any one of the preceding claims, further comprising:
- a device (144) configured to ignite the at least one propellant charge (118) for driving the fastener (116) into the workpiece (120), wherein the device (144) comprises a contact nose (146) configured to be pressed against the joining element (112), wherein the device (144) comprises at least one ignition tip (148) configure for igniting the at least one propellant charge (118) when the contact nose (146) is pressed against the joining element (112) and a trigger signal generated by using a trigger (150) of the device (144) is received.

15. A method for securing a joining element (112) to a workpiece (120) by using a fastener (116), wherein the method comprises using the system (110) according to any one of the preceding claims.
